Europäisches Patentamt

European Patent Office

Office européen des brevets

(11) Publication number: **0 491 275 B1**

## EUROPEAN PATENT SPECIFICATION

(45) Date of publication of patent specification: **12.10.94**

(51) Int. Cl.5: **G01D 21/02**, G01F 9/00, G01M 15/00

(21) Application number: **91121283.5**

(22) Date of filing: **11.12.91**

(54) **Device and method for the continuous diagnosis of the forced-induction unit of forced-induction internal-combustion engines.**

(30) Priority: **18.12.90 IT 6802290**

(43) Date of publication of application:
**24.06.92 Bulletin 92/26**

(45) Publication of the grant of the patent:
**12.10.94 Bulletin 94/41**

(84) Designated Contracting States:
**DE ES FR GB IT NL SE**

(56) References cited:
**EP-A- 0 076 764**

**PATENT ABSTRACTS OF JAPAN, vol. 12, no. 41 (M-666)(2888), 6 February 1988 & JP-A-62195492**

**PATENT ABSTRACTS OF JAPAN, vol. 8, no. 267 (M-343)(1704), 7 December 1984 & JP-A-59138791**

(73) Proprietor: **IVECO FIAT S.p.A.**
**Via Puglia 35**
**I-10156 Torino (IT)**

(72) Inventor: **Balzan, Paolo**
**Via Mattei, 10**
**28060 S. Pietro Mosezzo (IT)**
Inventor: **Piazza, Luigi**
**Piazza Monastero, 12**
**10100 Torino (IT)**

(74) Representative: **Cerbaro, Elena et al**
**c/o Studio Torta, Via Viotti 9**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to a device for the continuous diagnosis of the forced-induction unit of forced-induction internal-combustion engines in motor vehicles.

It is known that a forced-induction system comprises one or two turbocompressors, the satisfactory operation of which is essential for the efficiency of the engine. Therefore, it is important for the turbocompressor or turbocompressors to be monitored continuously so as to indicate and warn the driver of critical situations and allow the necessary action to be taken before an actual breakdown occurs.

In the PATENT ABSTRACTS OF JAPAN, vol. 12, no. 41, (M-666)(2888), 6. February 1988 & JP-A-62 195 492 (HITACHI LTD.), 28. August 87, a device for controlling the surge preestimation of a compressor is disclosed. This device comprises inlet and outlet pressure detectors, a flow rate detector, and a data processing unit.

It is the object of the invention to devise a device for the continuous diagnosis of the forced-induction unit, which makes it possible to warn the driver in good time of incorrect operating conditions of the turbocompressor or turbocompressors. In addition, the device should be able to be readily adapted to various types of engine, be compact in size and of moderate cost.

According to the present invention, a device is devised for the continuous diagnosis of the forced-induction unit of forced-induction internal-combustion engines including at least one turbocompressor, characterised in that it comprises means adapted to acquire the inlet pressure and outlet pressure of the turbocompressor, means adapted to determine the actual ratio between the outlet pressure and the input pressure, means adapted to acquire fuel consumption, means adapted to acquire the number of engine revolutions, means adapted to determine the theoretical minimum ratio on the basis of the acquired fuel consumption and number of revolutions, and means for comparing the actual ratio and the theoretical minimum ratio and for generating an alarm signal whenever the actual ratio is below the theoretical mininum ratio.

The invention also relates to a method for the continuous diagnosis of the forced-induction unit of forced-induction internal-combustion engines including at least one turbocompressor, characterised in that it comprises the stages of acquiring the inlet pressure and outlet pressure of the turbocompressor, determining the actual ratio between the outlet pressure and the input pressure, acquiring the fuel consumption, acquiring the number of engine revolutions, determining the theoretical minimum ratio on the basis of the acquired fuel consumption and number of revolutions, comparing the actual ratio and the theoretical minimum ratio and generating an alarm signal whenever the actual ratio is below the theoretical minimum ratio.

With a view to a better understanding of the present invention, a preferred form of embodiment will be described below non-restrictively by way of example, with reference to the accompanying drawings, wherein:

Figure 1 illustrates a block diagram of the device according to the present invention;

Figure 2 illustrates a flow diagram of the method according to the present invention;

Figure 3 shows a graph of the curves of the ratio between the outlet pressure and inlet pressure as a function of two variables;

Figure 4 illustrates a map used in the device according to the present invention, and

Figure 5 shows a detail of the graph in Figure 3;

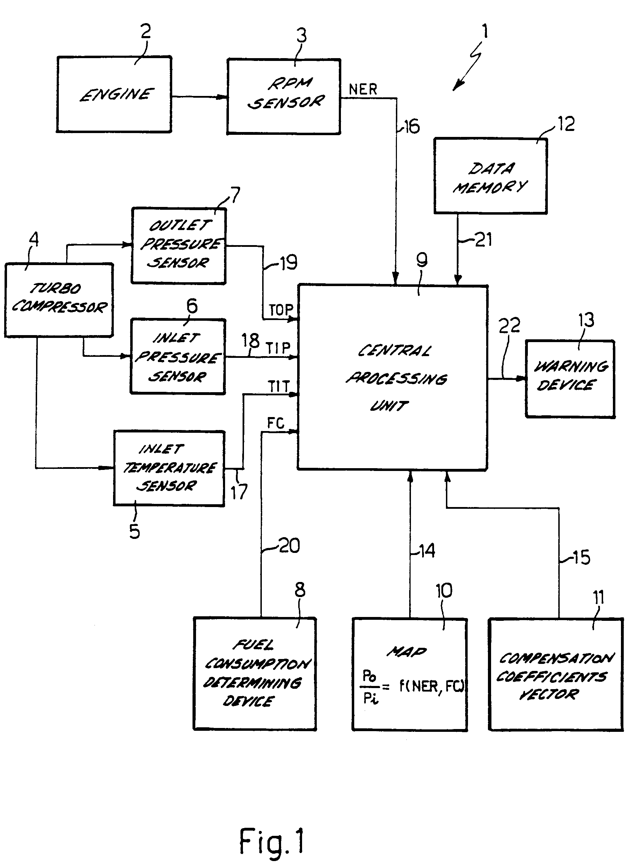

Referring now to Figure 1, the device for the continuous diagnosis of the forced-induction unit according to the present invention is generally designated by the reference numeral 1. The device 1 is intended to be connected to an engine 2 via a speed sensor 3 (typically the speed transducer mounted on the flywheel) which generates at its output a signal NER correlated to the number of revolutions of the engine 2 (or, more precisely, to the number of cycles of the engine itself, which is equal to half the number of revolutions). For the purpose of continuously monitoring the operation of the turbocompressor 4 it is connected to an inlet temperature sensor 5, which generates at its output a signal TIT, to an inlet pressure sensor 6, which generates at its output a signal TIP, to an outlet pressure sensor 7, which generates at its output a signal TOP. In detail, the signal TIT represents the temperature of the inlet air to the turbocompressor 4, in °C, while the signal TIP and the signal TOP represent respectively the air inlet pressure and air outlet pressure in mbar.

Furthermore, the device 1 is intended to be connected to a device 8 for determining fuel consumption, which may comprise a measuring device of known type. In this case, parts of the fuel consumption determining device 8 can be incorporated in the device 1 of the present invention. In either case, the consumption determining device 8 generates at its output a signal FC representing the fuel consumption in $mm^3$ per cycle.

The signals TIT, TIP and TIP are fed to a processing unit 9 which is also connected to a first memory unit 10 forming a map of the minimum ratio between the outlet pressure and inlet pressure of the turbocompressor 4, to a second memory unit 11 generating a vector representative of the compensation coefficients, to a third memory unit 12 forming a memory for the temporary data and partial results. Finally, the processing unit 9 is connected to a warning device 13, for example a light disposed on the instrument panel. In particular, the processing unit 9 is connected to the map 10 of the minimum ratio, to the coefficients vector 11 and to the sensors 3, 5, 6, 7, and also to the fuel consumption determining device 8 via respective one-way input lines 14, 15, 16, 17, 18, 19 and 20, to the data memory 12 via a two-way line 21, and to the warning device 13 via an output one-way line 22.

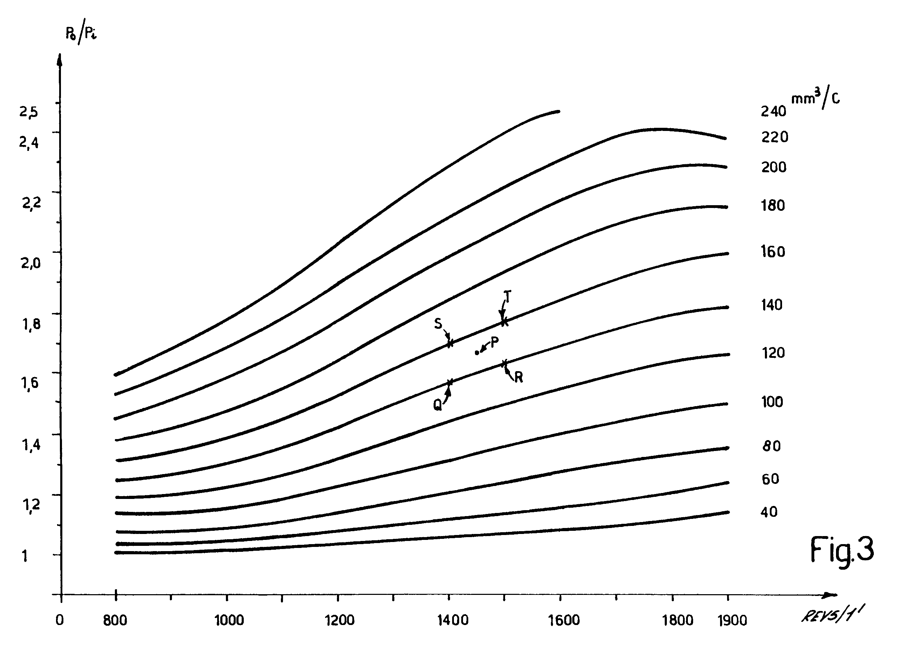

For diagnosing the operation of the turbocompressor, the device 1 is based on the fact that, in the case of satisfactory operation, the ratio between the output pressure and inlet pressure of the turbocompressor should exceed a constant depending on the speed of engine rotation and on fuel consumption. This constant is different for every type of engine and its behaviour, for each type of engine, can be represented as a series of curves, similar to those shown in Figure 3, in which the number of engine revolutions (in revolutions per minute) is recorded on the x-axis and the theoretical minimum ratio between the output pressure and inlet pressure is recorded on the y-axis, and each curve relates to a different fuel consumption value (in mm$^3$ per cylinder per cycle). In particular, the curves obtained for consumption increments of 20 mm$^3$/C, from 40 to 240 mm$^3$/C, are plotted in Figure 3.

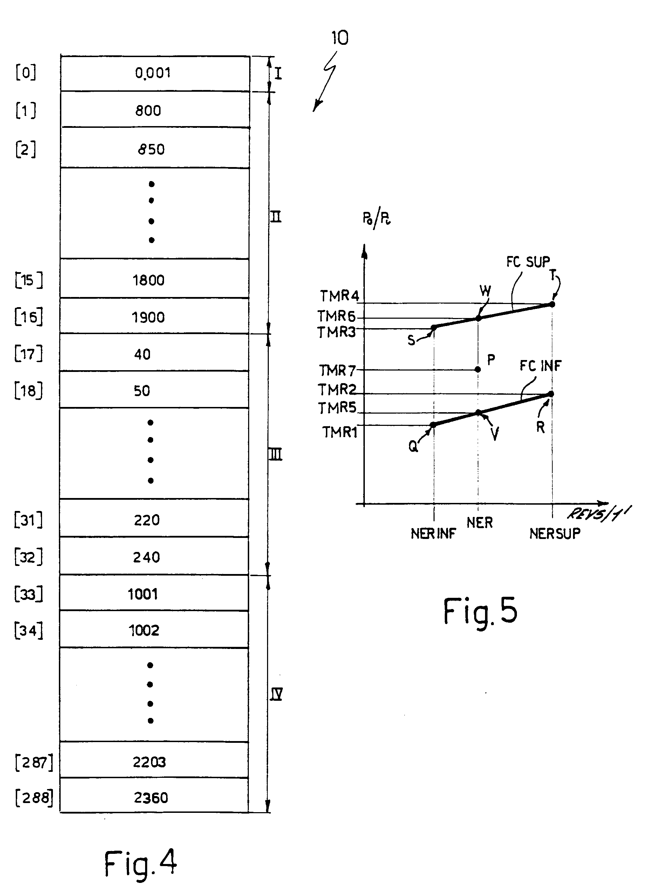

These curves are summarised in the map of Figure 4, which stores only discrete points of each curve. In particular, the map stores 16 curves (corresponding to 16 different consumption values, with non-uniform increments) and plots 16 points for each curve (in this case too the increments along the x-axis are not regular but the points are chosen in the most appropriate manner, for example taking into account the slope of the curve and the probability that the turbocompressor conditions are those charted).

Therefore, to achieve a high degree of flexibility according to the type of engine, the map 10 of the theoretical minimum ratio comprises a linear matrix divided into four sections, as indicated on the right of the map by the numbers I, II, III and IV.

With reference to Figure 4, the first section I comprises a single memory cell (having position 0, as indicated in square brackets on the left of the map 10) which contains a scale factor K, differing according to the type of engine, by which it is necessary to multiply the theoretical minimum ratio calculated in a manner to be described in more detail below.

The second and third sections II, III (each comprising sixteen memory cells, respectively between position 1 and position 16, and between position 17 and position 32, in square brackets) record as many values of the number of engine cycles and of fuel consumption for which the theoretical minimum ratio is recorded.

The fourth section IV (comprising 256 memory cells, between 33 and 288, in square brackets) records as many values of the theoretical minimum ratio. In particular, each store address location [k] of this section IV stores the ratio relating to the engine cycle and consumption values recorded in the second and third sections. In detail, by designating [i] and [j] the addresses of the store locations relating to the number cycles and consumption for a generic point of the curves in Figure 3, the relevant ratio is stored in the store address location:

$$[k] = [i] + 16^*[j] - 240. \qquad (1)$$

However, the coefficients vector 11 comprises a vector of seven elements and is stored in an operationally separate EEPROM memory.

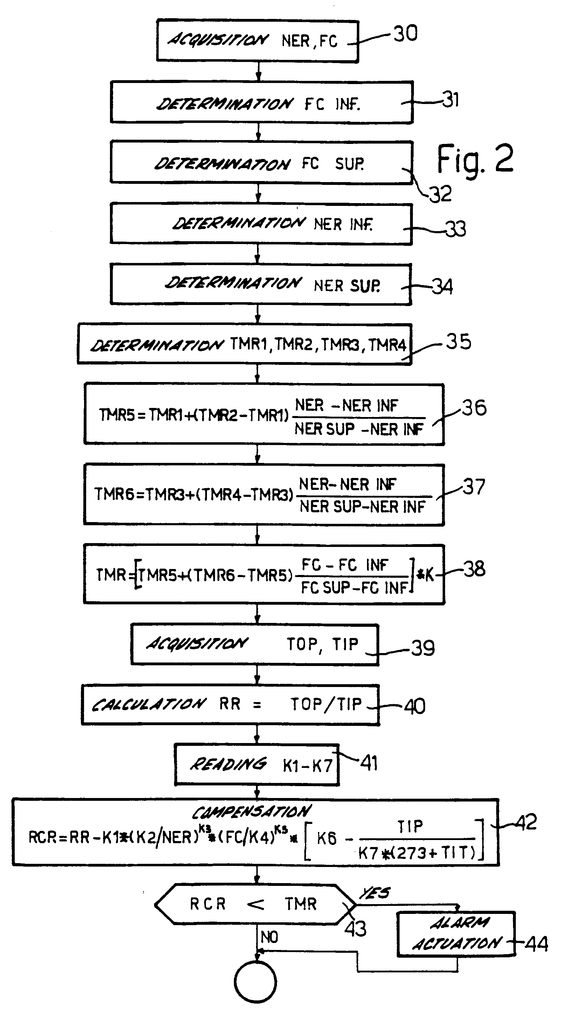

The device operates in accordance with the method which will be described below, with reference to Figure 2.

Initially (blocks 30) the processing unit 9 acquires, via the lines 16 and 20, the number of cycles NER and the fuel consumption FC. These values are measured and calculated, but are of analogue type, i.e. in a substantially continuously variable manner. However, as already stated, since the device stores only the theoretical minimum ratio in relation to discrete values for the number of revolutions and for fuel consumption, it is very probable that the values measured do not come within those recorded and, therefore, the processing unit 9 has to obtain the ratio in a specific case by interpolation. In practice, if the measured operating point of the engine is that indicated by P in Figure 3, according to the present method firstly the values of the theoretical minimum ratio at the nearest recorded points Q, R, S and T are read and then, by interpolation, the theoretical minimum ratio at the point P is calculated.

For this purpose, the processing unit 9 determines, in section III, the recorded fuel consumption value FCINF immediately below the value fed through line 20, and stores the address (block 31) thereof, and also determines the recorded consumption FCSUP immediately succeeding FCINF (i.e. contained in the immediately succeeding store location) and stores the address (block 32) thereof. These values FCINF and FCSUP thus represent the two fuel consumption values recorded, which are approximated by short-fall and by excess in relation to the actual value.

In an analogous manner, the processing unit 9 determines, in section II, the recorded number of cycles NERINF immediately below the actual value, detected by the sensor 3 (block 33) and the immediately succeeding (block 34) recorded number of cycles NERSUP. Additionally, the processing unit 9 stores the address of the store locations of these two recorded values.

Subsequently, the processing unit 9 determines, in the fourth section of the map 10, the recorded values of the theoretical minimum ratio TMR1, TMR2, TMR3, TMR4 which correspond, respectively, to the pairs of values (NERINF, FCINF), (NERSUP, FCINF), (NERINF, FCSUP) and (NERSUP, FCSUP) which correspond to the points Q, R, S, T in Figure 3, using equation (1) (block 35).

Subsequently, the processing unit 9 calculates the intermediate value of the ratio TMR5 between TMR1 and TMR2, extrapolating the constant consumption curve (equal to FCINF). For this purpose, the equation indicated in block 36 (Figure 2) is used, which involves calculating the ordinate of point V having the x-axis NER (number of actual cycles measured) on the straight line joining the points Q and R (see also Figure 5).

In an analogous manner, the intermediate value of the ratio TMR6 between TMR3 and TMR4 is calculated, extrapolating the curve FCSUP, so as to obtain the ordinate of the point W in Figure 3 (block 37). Finally, the intermediate value TMR7 between TMR5 and TMR6 is calculated, as the ordinate of the point P having, as consumption co-ordinate, the measured value FC belonging to the straight line passing through the points V and W. Therefore, after the reading of the scale factor K in the store location having the address [0] of the map 10 and the multiplication by the ratio TMR7 previously calculated, the theoretical minimum ratio TMR is obtained corresponding to the measured operating point (block 38).

This value is stored, then (block 39) the processing unit 9 acquires, along the lines 18 and 19, the signals TIP and TOP relating to the inlet pressure and output pressure of the turbocompressor 4. Subsequently (block 40), the actual ratio RR between the output pressure and inlet pressure is calculated, the vector 11 relating to the compensation coefficients K1-K7 (block 41) is then read and the actual compensated ratio RCR is calculated using the following equation (block 42):

$$RCR = RR - K1 * \left[\frac{K2}{NER}\right]^{K3} * \left[\frac{FC}{K4}\right]^{K5} * \left[K6 - \frac{TIT}{K7*(273+TIT)}\right].$$

Subsequently (block 43), the compensated actual ratio RCR is compared with a previously calculated and stored theoretical minimum ratio TMR. If the compensated actual ratio RCR is below the theoretical minimum ratio (YES output of block 43), this means that the turbocompressor is not operating under correct conditions, whereupon an actuation signal is generated for the warning device 13, which signal is transmitted along the line 22. In the contrary case (NO output of block 43) or else after the warning has been actuated, the iteration terminates and the processing unit 9 can recommence the procedure at a predetermined frequency, for example of 10 Hz, starting from block 30.

The device and method described above have the following advantages.

Firstly, the device allows the continuous diagnosis of the operation of the turbocompressor 4 and immediately indicates critical operating conditions which necessitate an overhaul of the forced-induction system, before an actual breakdown occurs. Furthermore, the device is of extremely small size and weight, since the number of revolutions transducer 3 and at least the outlet pressure sensor 7 are already provided and, in any case, the sensors 5 and 6 are of small size. Moreover, the electronic unit is of extremely small size and, optionally, its operation may be carried out by other processing units already provided in the vehicle.

The device is of substantially identical design for the various types of engine, and only the theoretical minimum ratio map differs according to the specific engine type. Furthermore, this map can be implemented by means of a programmable memory unit, for which the storing of the recorded specific values of engine cycles, fuel consumption and theoretical minimum ratio, depending on the various engine types, does not necessitate any modification of the equipment and may be carried out at any time during the production process. In addition, the same logic element which verifies the operation of the turbocompressor is able to carry out further processing operations.

4

The simplicity of the proposed solution ensures that the device is reliable and is able to provide indications in real time. Moreover, the production costs of the device are moderate.

The above-described design of the map 10 is especially advantageous insofar as it makes it possible to reduce to a minimum the extent to which the memory is occupied by the data required to calculate the theoretical minimum ratio. In fact, in the embodiment described by way of example the entire map can be implemented by a matrix store EEPROM with 289 cells of 8 bits, in spite of which comparable levels of accuracy for the various engine types are maintained on account of the provision of the scale factor which makes it possible to store, with the same level of accuracy, minor and major values of the ratio, according to the engine type.

Finally, it is evident that the method and apparatus described and illustrated here could undergo various modifications, without thereby departing from the scope of protection of the appended Claims. In particular, it is emphasized that the sensors 3, 5-7 and the fuel consumption determining device 8 could be of any type. Moreover, the architecture of the device 1 may also be varied with respect to the embodiment illustrated in Figure 1, in particular the processing unit 9, the map 10, the compensation coefficients vector 11 and the data memory 12 may be integrated into a single device which, optionally, can be interfaced with other units or which may form an integral part of a more extensive management system for specific parameters of the vehicle.

The device and method described here could also be applied to forced-induction units provided with two turbocompressors. In that case the device would comprise two output pressure sensors, one for each turbocompressor, and the stages represented by blocks 39-43 would be repeated twice, using as the output pressure value TOP, firstly, the signal supplied by an output sensor and then the signal supplied by the other output pressure sensor, and generating a warning signal when at least one of the two values of the compensated actual ratio is below the theoretical minimum ratio.

## Claims

1. A device for the continuous diagnosis of the forced-induction unit of forced-induction internal-combustion engines including at least one turbocompressor (4), characterised in that it comprises means (6, 7, 39) adapted to acquire the inlet pressure (TIP) and outlet pressure (TOP) of the turbocompressor (4), means (9, 40) adapted to determine the actual ratio (RCR) between the outlet pressure and the input pressure, means (8, 30) adapted to acquire fuel consumption (FC), means (3, 30) adapted to acquire the number of revolutions (NER) of the engine (2), means (31-38) adapted to determine the theoretical minimum ratio (TMR) between the outlet pressure and the inlet pressure on the basis of the acquired fuel consumption (FC) and number of revolutions (NER) of the engine (2), and means (43, 44) adapted to compare the actual ratio (RCR) and the theoretical minimum ratio (TMR) and to generate an alarm signal whenever the actual ratio is below the theoretical minimum ratio.

2. A device according to claim 1, characterised in that said means (31-38) adapted to determine the theoretical minimum ratio (TMR) comprise a memory unit (10) storing the theoretical minimum ratio as a function of the acquired fuel consumption (FC) and number of revolutions (NER).

3. A device according to claim 2, characterised in that said memory unit comprises a map (10) storing values of the theoretical minimum ratio (TMR) in relation to discrete operating points.

4. A device according to claim 3, characterised in that said map (10) has a first section (III) storing a plurality of values correlated to discrete consumption values, a second section (II) storing a plurality of values correlated to discrete numbers of revolutions of the engine (2), and a third section (IV) storing the values of the theoretical minimum ratio corresponding to each pair of values stored in the first and second sections.

5. A device according to claim 4, characterised in that the device comprises means (31, 32) adapted to retrieve, in said first section (III), a value (FCINF) immediately below and a value (FCSUP) immediately above the actual fuel consumption (FC), means (33, 34) adapted to retrieve, in said second section (II), a value (NERINF) immediately below and a value (NERSUP) immediately above the actual number of revolutions (NER) of the engine (2), means (35) adapted to retrieve, in said third section (IV), the ratio values (TMR1-TMR4) corresponding to operating points (Q, R, S, T) identified by pairs of said values for consumption (FCINF, FCSUP) and number of revolutions (NERINF, NERSUP) retrieved in the first and second sections (III, II), and means (36, 38) adapted to provide an intermediate value in respect of the theoretical minimum ratio values (FC1-FC4) retrieved in said third section (IV).

6. A device according to claim 5, characterised in that said means adapted to provide an intermediate value comprise means (36-38) adapted to extrapolate the characteristic of the theoretical minimum ratio between adjacent operating points (Q, R, S, T).

7. A device according to claim 6, characterised in that said means adapted to extrapolate comprise means (36) adapted to extrapolate the characteristic of the theoretical minimum ratio between two adjacent points (Q, R) relative to the immediately lower consumption value (FCINF) for the determination of a lower theoretical minimum ratio value (TMR5), means (37) adapted to extrapolate the characteristic of the theoretical minimum ratio between two adjacent points (S, T) relative to the immediately higher consumption value (FCSUP) for the determination of an immediately higher power value (TMR6), and means (39) adapted to extrapolate the characteristic of the theoretical minimum ratio between said lower value (TMR5) and said higher theoretical minimum ratio value (TMR6).

8. A device according to any one of the preceding claims, characterised in that said means adapted to determine the actual ratio between the output pressure and inlet pressure comprise means (40) adapted to determine the quotient (RR) between the outlet pressure (TOP) and the inlet pressure (TIP), and means (41) adapted to compensate said quotient on the basis of the following equation:

$$RCR = RR - K1 * \left[\frac{K2}{NER}\right]^{K3} * \left[\frac{FC}{K4}\right]^{K5} * \left[K6 - \frac{TIT}{K7*(273+TIT)}\right],$$

wherein RR is the quotient determined, NER is the number of revolutions of the engine (2), FC is the engine fuel consumption, TIT is the inlet temperature of the turbocompressor, TIP is the inlet pressure of the turbocompressor (4) and K1-K7 are constant compensating coefficients.

9. A device according to any one of the preceding claims, characterised in that it comprises a warning alarm (13) actuated by said alarm signal.

10. A device according to any one of the preceding claims, characterised in that said means adapted to acquire the number of engine revolutions comprise a transducer (3) for the number of revolutions.

11. A method for the continuous diagnosis of the forced-induction unit of forced-induction internal-combustion engines including at least one turbocompressor (4), characterised in that it comprises the stages of acquiring the inlet pressure (TIP) and outlet pressure (TOP) of the turbocompressor (4), determining the actual ratio (RCR) between the outlet pressure and the input pressure, acquiring the fuel consumption (FC), acquiring the number of revolutions (NER) of the engine (2), determining the theoretical minimum ratio (NMR) between the outlet pressure and the inlet pressure on the basis of the acquired fuel consumption and number of revolutions of the engine (2), comparing the actual ratio and the theoretical minimum ratio and generating an alarm signal whenever the actual ratio is below the theoretical minimum ratio.

12. A method according to claim 12, characterised in that said stage of determining the theoretical minimum ratio comprises the stages of reading a theoretical minimum ratio value (TMR) as a function of the acquired fuel consumption (FC) and number of revolutions (NER).

13. A method according to claim 11, characterised in that said stage of determining the theoretical ratio (TMR) comprises the stage of retrieving the stored theoretical ratio values (TMR1-TMR4) for discrete operating points (Q, R, S, T) adjacent the actual operating point (P) dictated by the acquired fuel consumption (FC) and by the number of revolutions (NER), and determining the theoretical minimum ratio (TMR) at the actual operating point (P) as an intermediate ratio between said stored theoretical minimum ratio values (TMR1-TMR4).

14. A method according to claim 13, characterised by retrieving a value (FCINF) immediately below and a value (FCSUP) immediately above the actual fuel consumption (FC), retrieving a value (NERINF) immediately below and a value (NERSUP) immediately above the actual number of revolutions (NER) of the engine (2), retrieving the lower and upper ratio values (TMR1-TMR4) corresponding to operating points (Q, R, S, T) identified by pairs of said retrieved values for consumption (FCINF, FCSUP) and number of revolutions (NERINF, NERSUP), and determining an intermediate value in respect of the retrieved upper and lower theoretical minimum ratio values (TRM1-TMR4).

15. A method according to claim 14, characterised in that said stage of retrieving an intermediate value comprises the stage of extrapolating the characteristic of the theoretical minimum ratio between adjacent operating points (Q, R, S, T).

16. A method according to claim 15, characterised in that said extrapolating stage comprises the stages of extrapolating the characteristic of the theoretical minimum ratio between two adjacent points (Q, R) relative to the immediately lower consumption value (FCINF) for the determination of a lower theoretical ratio value (TMR5), extrapolating the characteristic of the theoretical minimum ratio between two adjacent points (S, T) relative to the immediately higher consumption value (FCSUP) for the determination of an immediately higher theoretical ratio value (TMR6), and extrapolating the characteristic of the theoretical minimum ratio between said lower value (TMR5) and said higher value (TMR6) of the theoretical minimum ratio.

17. A method according to any one of claims 11-16, characterised in that said stage of determining the actual ratio between the output pressure and inlet pressure comprises the stages of determining the quotient (RR) between the outlet pressure (TOP) and the inlet pressure (TIP), and compensating said quotient on the basis of the following equation:

$$RCR = RR - K1 * \left[\frac{K2}{NER}\right]^{K3} * \left[\frac{FC}{K4}\right]^{K5} * \left[K6 - \frac{TIT}{K7*(273+TIT)}\right],$$

wherein RR is the quotient determined, NER is the number of revolutions of the engine (2), FC is the engine fuel consumption, TIT is the inlet temperature of the turbocompressor, TIP is the inlet pressure of the turbocompressor (4) and K1-K7 are constant compensating coefficients.

18. A method for the continuous diagnosis of a forced-induction unit comprising a second turbocompressor, according to any of claims 11-17, characterised by repeating the stages of acquiring the inlet pressure and outlet pressure of the second turbocompressor, determining the actual ratio between the outlet pressure and the input pressure of the second turbocompressor, comparing the actual ratio and the theoretical minimum ratio (TMR) and generating an alarm signal whenever the actual ratio of the second turbocompressor is below the theoretical minimum ratio.

**Patentansprüche**

1. Vorrichtung für die kontinuierliche Diagnose der Ladeeinheit von geladenen Brennkraftmaschinen mit wenigstens einem Turbo-Kompressor (4), dadurch **gekennzeichnet**, daß sie eine Einrichtung (6,7,39) zum Ermitteln des Einlaßdruckes (TIP) und des Auslaßdruckes (TOP) des Turbo-Kompressors (4), eine Einrichtung (9,40) zur Bestimmung des jeweiligen Verhältnisses (RCR) zwischen dem Auslaßdruck und dem Einlaßdruck, eine Einrichtung (8,30) zum Erfassen des Brennstoffverbrauchs (FC), eine Einrichtung (3,30) zum Erfassen der Drehzahl (NER) der Maschine (2), eine Einrichtung (32 - 38) zum Bestimmen des theoretischen Mindestverhältnisses (TMR) zwischen dem Auslaßdruck und dem Einlaßdruck auf der Basis des ermittelten Brennstoffverbrauchs (FC) und der Drehzahl (NER) der Maschine (2) und eine Einrichtung (43,44) zum Vergleichen des jeweiligen Verhältnisses (RCR) und des theoretischen Mindestverhältnisses (TMR) und zur Erzeugung eines Alarmsignals, wenn das tatsächliche Verhältnis niedriger als das theoretische Mindestverhältnis ist, umfaßt.

2. Vorrichtung nach Anspruch 1, dadurch **gekennzeichnet**, daß die Einrichtung (31 - 38) zum Bestimmen des theoretischen Mindestverhältnisses (TMR) eine Speichereinrichtung (10) umfaßt, die das theoretische Mindestverhältnis als Funktion des erfaßten Brennstoffverbrauchs (FC) und der Drehzahl (HER) speichert.

3. Vorrichtung nach Anspruch 2, dadurch **gekennzeichnet**, daß die Speichereinheit einen Speicher (10) umfaßt, der Werte des theoretischen Mindestverhältnissen (TMR) in Bezug auf bestimmte Arbeitspunkte speichert.

4. Vorrichtung nach Anspruch 3, dadurch **gekennzeichnet**, daß der Speicher (10) einen ersten Abschnitt (III), der eine Anzahl von Werten speichert, die mit bestimmten Verbrauchswerten korrelieren, einen zweiten Abschnitt (II), der eine Anzahl von Werten speichert, die mit bestimmten Drehzahlen der Maschine (2) korrelieren, und einen dritten Abschnitt (IV) umfaßt, der die Werte des theoretischen Mindestverhältnisses speichert, die jedem Wertepaar entsprechen, das in dem ersten und zweiten Abschnitt gespeichert ist.

5. Vorrichtung nach Anspruch 4, dadurch **gekennzeichnet**, daß die Vorrichtung eine Einrichtung (31,32) aufweist, die in der Lage ist, in dem ersten Abschnitt (III) einen Wert (FCINF) unmittelbar unterhalb und einen Wert (FCSUP) unmittelbar oberhalb des tatsächlichen Brennstoffverbrauchs (FC) aufzufinden, sowie eine Einrichtung (33,34), die in der Lage ist, in dem zweiten Abschnitt (II) einen Wert (NERINF) unmittelbar unterhalb und einen Wert (NERSUP) unmittelbar oberhalb der tatsächlichen Drehzahl (NER) der Maschine (2) aufzufinden, eine Einrichtung (35), die in der Lage ist, in dem dritten Abschnitten (IV) die Verhältniswerte (TMR1 - TMR4) aufzufinden, die den Arbeitspunkten (Q, R, S T) entsprechen, die durch die Wertepaare für Verbrauch (FCINF, FCSUP) und die Drehzahlen (NERINF, NERSUP) entsprechen, die in dem ersten und zweiten Abschnitt (III, II) aufgefunden worden sind, sowie eine Einrichtung (36,38), die einen Zwischenwert in Bezug auf die theoretischen Mindestverhältniswerte (FC1 - FC4) liefert, die im dritten Abschnitt (IV) ermittelt worden sind.

6. Vorrichtung nach Anspruch 5, dadurch **gekennzeichnet**, daß die Einrichtung zur Lieferung eines Zwischenwertes eine Einrichtung (36 - 38) umfaßt, die die Charakteristik des theoretischen Mindestverhältnisses zwischen aufeinander folgenden Arbeitspunkten (Q, R, S, T) extrapoliert.

7. Vorrichtung nach Anspruch 6, dadurch **gekennzeichnet**, daß die Einrichtung zum Extrapolieren eine Einrichtung (36) umfaßt, die die Charakteristik des theoretischen Mindestverhältnisses zwischen zwei aufeinander folgenden Punkten (Q, R) in Bezug auf den unmittelbar niedrigeren Verbrauchswert (FCINF) zur Bestimmung eines unteren theoretischen Mindestverhältniswertes (TMR5) extrapoliert, eine Einrichtung (37), die die Charakteristik des theoretischen Mindestverhältnisses zwischen zwei aufeinander folgenden Punkten (S, T) in Bezug auf den unmittelbar höheren Verbrauchswert (FCSUP) zur Bestimmung eines unmittelbar höheren Leistungswertes (TMR6) extrapoliert, und eine Einrichtung (39), die die Charakteristik des theoretischen Mindestverhältnisses zwischen dem unteren Wert (TMR5) und dem höheren theoretischen Mindestverhältniswert (TMR6) extrapoliert.

8. Vorrichtung nach einem der vorhergehenden Ansprüche, dadurch **gekennzeichnet**, daß die Einrichtung zum Bestimmen des tatsächlichen Verhältnisses zwischen dem Ausgangsdruck und dem Eingangsdruck eine Einrichtung (40), die den Quotienten (RR) zwischen dem Auslaßdruck (TOP) und dem Einlaßdruck (TIP) bestimmt, und eine Einrichtung (41) umfaßt, die den Quotienten auf der Basis der vorliegenden Gleichung kompensiert:

$$RCR = RR - K1 * \left[\frac{K2}{NER}\right]^{K3} * \left[\frac{FC}{K4}\right]^{K5} * \left[K6 - \frac{TIT}{K7 * (273 + TIT)}\right]$$

In dieser Gleichung ist RR der Quotient, der bestimmt wird, NER die Drehzahl der Maschine (2), FC der Brennstoffverbrauch der Maschine, TIT die Einlaßtemperatur des Turbo-Kompressors, TIP der Einlaßdruck des Turbo-Kompressors (4) und K1 - K7 sind konstante Kompensationskoeffizienten.

9. Vorrichtung nach einem der vorhergehenden Ansprüche, dadurch **gekennzeichnet**, daß sie eine Alarmeinrichtung (13) umfaßt, die durch das Alarmsignal betätigt wird.

8

**10.** Vorrichtung nach einem der vorhergehenden Ansprüche, dadurch **gekennzeichnet**, daß die Einrichtung zum Erfassen der Maschinendrehzahl einen Bander (3) für die Anzahl der Umdrehungen umfaßt.

**11.** Verfahren für die kontinuierliche Diagnose der Ladeeinheit von geladenen Brennkraftmaschinen mit wenigstens einem Turbo-Kompressor (4), dadurch **gekennzeichnet**, daß es die Schritte des Erfassens des Einlaßdruckes (TIP) und Auslaßdruckes (TOP) des Turbo-Kompressors (4), des Bestimmens des tatsächlichen Verhältnisses (RCR) zwischen dem Auslaßdruck und dem Einlaßdruck, des Erfassens des Brennstoffverbrauchs (FC), des Erfassens der Drehzahl (NER) der Maschine, des Erfassens des theoretischen Mindestverhältnisses (NMR) zwischen dem Auslaßdruck und dem Einlaßdruck auf der Basis des erfaßten Brennstoffverbrauchs und der Drehzahl der Maschine (2), und des Vergleichens des tatsächlichen Verhältnisses und des theoretischen Mindestverhältnisses und Erzeugen eines Alarmsignals, wenn das tatsächliche Verhältnis niedriger als das theoretische Mindestverhältnis ist, umfaßt.

**12.** Verfahren nach Anspruch 12, dadurch **gekennzeichnet**, daß der Schritt des Bestimmens des theoretischen Mindestverhältnisses die Schritte des Lesens eines theoretischen Mindestverhältniswertes (TMR) als Funktion des erfaßten Brennstoffverbrauchs (FC) und der Drehzahl (NER) umfaßt.

**13.** Verfahren nach Anspruch 11, dadurch **gekennzeichnet**, daß der Schritt des Bestimmens des theoretischen Verhältnisses (TMR) den Schritt des Auffindens der gespeicherten theoretischen Verhältniswerte (TMR1 - TMR4) für bestimmte Arbeitspunkte (Q, R, S, T) angrenzend an den tatsächlichen Arbeitspunkt (P), vorgegeben durch den erfaßten Brennstoffverbrauch (FC) und den Drehzahl (NER), und des Bestimmens des theoretischen Mindestverhältnisses (TMR) am tatsächlichen Arbeitspunkt (P) als Zwischenverhältnis zwischen den gespeicherten theoretischen Mindestverhältniswerten (TMR1 - TMR4) umfaßt.

**14.** Verfahren nach Anspruch 13, **gekennzeichnet** durch das Auffinden eines Wertes (FCINF) unmittelbar unterhalb und eines Wertes (FCSUP) unmittelbar oberhalb des tatsächlichen Brennstoffverbrauchs (FC), des Auffinden eines Wertes (NERINF) unmittelbar unterhalb oder eines Wertes (NERSUP) unmittelbar oberhalb der tatsächlichen Drehzahl (NER) der Maschine (2), des Auffindens der unteren und oberen Verhältniswerte (TMR1 - TMR4), die Arbeitspunkten (Q, R, S, T) entsprechen, die durch Paare der aufgefundenen Werte für den Verbrauch (FCINF, FCSUP) und die Drehzahl (NERINF, NERSUP), und durch Bestimmen eines Zwischenwertes in Bezug auf die aufgefundenen oberen und unteren theoretischen Mindestverhältniswerte (TMR1 - TMR 4).

**15.** Verfahren nach Anspruch 14, dadurch **gekennzeichnet**, daß der Schritt des Auffindens eines Zwischenwertes den Schritt des Extrapolierens der Charakteristik des theoretischen Mindestverhältnisses zwischen aufeinanderfolgenden Arbeitspunkten (Q, R, S, T).

**16.** Verfahren nach Anspruch 15, dadurch **gekennzeichnet**, daß der Schritt des Extrapolierens die Schritte des Extrapolierens der Charakteristik des theoretischen Mindestverhältnisses zwischen zwei aufeinander folgenden Punkten (Q, R) in Bezug auf in den unmittelbar niedrigeren Verbrauchswert (FCNF) zur Bestimmung des unteren theoretischen Verhältniswertes (TMR5), des Extrapolierens der Charakteristik und des theoretischen Mindestverhältnisses zwischen zwei aufeinander folgenden Punkten (S, T) in Bezug auf den unmittelbar höheren Verbrauchswert (FCSUP) zur Bestimmung eines unmittelbar höheren theoretischen Verhältniswertes (TMR6), und des Extrapolierens der Charakteristik des theoretischen Mindestverhältnisses zwischen dem unteren Wert (TMR5) und dem höheren Wert (TMR6) des theoretischen Mindestverhältnisses umfaßt.

**17.** Verfahren nach einem der Ansprüche 11 bis 16, dadurch **gekennzeichnet**, daß der Schritt des Bestimmens des tatsächlichen Verhältnisses zwischen dem Auslaßdruck und dem Einlaßdruck die Schritte des Bestimmens des Quotienten (RR) zwischen dem Auslaßdruck (TOP) und dem Einlaßdruck (TIP) und des Kompensierens des Quotienten auf der Basis der folgenden Gleichung umfaßt:

$$RCR = RR - K1 * \left[\frac{K2}{NER}\right]^{K3} * \left[\frac{FC}{K4}\right]^{K5} * \left[K6 - \frac{TIT}{K7*(273+TIT)}\right]$$

In dieser Gleichung ist RR der Quotient, der bestimmt worden ist, NER ist die Drehzahl der Maschine (2), FC ist der Brennstoffverbrauch der Maschine, TIT ist die Einlaßtemperatur des Turbo-Kompressors. TIP ist der Einlaßdruck des Turbo-Kompressors (4) und K1 bis K7 sind konstante Kompensations-Koeffizienten.

18. Verfahren führ die kontinuierliche Diagnose einer Ladeeinheit mit einem zweiten Turbo-Kompressor gemäß einem der Ansprüche 11 bis 17, **gekennzeichnet** durch das Wiederholen der Schritte des Erfassens des Einlaßdrucks und Auslaßdrucks des zweiten Turbo-Kompressors, des Bestimmens des tatsächlichen Verhältnisses zwischen dem Auslaßdruck und dem Einlaßdruck des zweiten Turbo-Kompressors, des Vergleichs des tatsächlichen Verhältnisses und des theoretischen Mindestverhältnisses (TMR) und des Erzeugens eines Alarmsignals, wenn das tatsächliche Verhältnis des zweiten Turbo-Kompressors unter dem theoretischen Mindestverhältnis liegt.

**Revendications**

1. Dispositif pour le diagnostic continu de l'unité de suralimentation pour moteurs suralimentés à combustion interne comportant au moins un turbocompresseur (4),
caractérisé en ce qu'il comprend des moyens (6, 7, 39) adaptés pour acquérir la pression d'entrée (TIP) et la pression de sortie (TOP) du turbocompresseur (4), des moyens (9, 40) adaptés pour déterminer le rapport réel (RCR) entre la pression de sortie et la pression d'entrée, des moyens (8, 30) adaptés pour acquérir la consommation de carburant (FC), des moyens (3, 30) adaptés pour acquérir le nombre de tours (NER) du moteur (2), des moyens (31 à 38) adaptés pour déterminer le rapport théorique minimal (TMR) entre la pression de sortie et la pression d'entrée sur la base de la consommation acquise de carburant (FC) et le nombre acquis de tours (NER) du moteur (2), et des moyens (43, 44) adaptés pour comparer le rapport réel (RCR) avec le rapport théorique minimal (TMR) et pour générer un signal d'alarme dès que le rapport réel est inférieur au rapport théorique minimal.

2. Dispositif selon la revendication 1, caractérisé en ce que lesdits moyens (31 à 38) adaptés pour déterminer le rapport théorique minimal (TMR) comprennent une unité de mémoire (10) contenant le rapport théorique minimal en fonction de la consommation acquise de carburant (FC) et du nombre acquis de tours (NER).

3. Dispositif selon la revendication 2, caractérisé en ce que ladite unité de mémoire comporte une carte (10) contenant des valeurs du rapport théorique minimal (TMR) par rapport à des points discrets de fonctionnement.

4. Dispositif selon la revendication 3, caractérisé en ce que ladite carte (10) comporte une première section (III) contenant une multitude de valeurs corrélées à des valeurs discrètes de consommation, une deuxième section (II) contenant une multitude de valeurs corrélées à des nombres de tours discrets du moteur (2), et une troisième section (IV) contenant des valeurs du rapport théorique minimal correspondant à chaque paire des valeurs contenues dans les première et deuxième sections.

5. Dispositif selon la revendication 4, caractérisé en ce que le dispositif comprend des moyens (31, 32) adaptés pour récupérer, dans ladite première section (III), une valeur (FCINF) immédiatement inférieure et une valeur (FCSUP) immédiatement supérieure à la consommation réelle de carburant (FC), des moyens (33, 34) adaptés pour récupérer, dans ladite deuxième section (II), une valeur (NERINF) immédiatement inférieure et une valeur (NERSUP) immédiatement supérieure au nombre de tours réel (NER) du moteur (2), des moyens (35) adaptés pour récupérer, dans ladite troisième section (IV), les valeurs des rapports (TMR1 à TMR4) correspondant à des points de fonctionnement (Q, R, S, T) définis par des paires desdites valeurs de consommation (FCINF, FCSUP) et de nombre de tours (NERINF, NERSUP) récupérées dans les première et deuxième sections (III, II), et des moyens (36, 38) adaptés pour fournir une valeur intermédiaire tenant compte des valeurs de rapport théorique minimal (FC1 à FC4) récupérées dans ladite troisième section (IV).

6. Dispositif selon la revendication 5, caractérisé en ce que lesdits moyens adaptés pour fournir une valeur intermédiaire comprennent des moyens (36 à 38) adaptés pour extrapoler la courbe caractéristique du rapport théorique minimal entre des points de fonctionnement contigus (Q, R, S, T).

**7.** Dispositif selon la revendication 6, caractérisé en ce que lesdits moyens adaptés pour effectuer l'extrapolation comprennent des moyens (36) adaptés pour extrapoler la courbe caractéristique du rapport théorique minimal entre deux points contigus (Q, R) relatifs à la valeur de consommation immédiatement inférieure (FCINF) en vue de la détermination d'une valeur inférieure du rapport théorique minimal (TMR5), des moyens (37) adaptés pour extrapoler la courbe caractéristique du rapport théorique minimal entre deux points contigus (S, T) relatifs à la valeur de consommation immédiatement supérieure (FCSUP) en vue de la détermination d'une valeur (TMR6) d'une puissance immédiatement supérieure, et des moyens (39) adaptés pour extrapoler la courbe caractéristique du rapport théorique minimal entre ladite valeur inférieure (TMR5) et ladite valeur supérieure (TMR6).

**8.** Dispositif selon l'une quelconque des revendications précédentes, caractérisé en ce que lesdits moyens adaptés pour déterminer le rapport réel entre la pression de sortie et la pression d'entrée comprennent des moyens (40) adaptés pour déterminer le quotient (RR) entre la pression de sortie (TOP) et la pression d'entrée (TIP), et des moyens (41) adaptés pour compenser ledit quotient sur la base de l'équation suivante:

$$RCR = RR - K1 \cdot \left[\frac{K2}{NER}\right]^{K3} \cdot \left[\frac{FC}{K4}\right]^{K5} \cdot \left[K6 - \frac{TIT}{K7 \cdot (273 + TIT)}\right]$$

où RR est le quotient déterminé, NER est le nombre de tours du moteur (2), FC est la consommation de carburant du moteur, TIT est la température à l'entrée du turbocompresseur, TIP est la pression d'entrée du turbocompresseur (4) et K1 à K7 sont des coefficients constants de compensation.

**9.** Dispositif selon l'une quelconque des revendications précédentes, caractérisé en ce qu'il comprend une alarme (13) actionnée par ledit signal d'alarme.

**10.** Dispositif selon l'une quelconque des revendications précédentes, caractérisé en ce que lesdits moyens adaptés pour mesurer le nombre de tours du moteur comprennent un capteur (3) du nombre de tours.

**11.** Procédé de diagnostic continu de l'unité de suralimentation de moteurs suralimentés à combustion interne comprenant au moins un turbocompresseur (4), caractérisé en ce qu'il comprend les étapes consistant à acquérir la pression d'entrée (TIP) et la pression de sortie (TOP) du turbocompresseur (4), à déterminer le rapport réel (RCR) entre la pression de sortie et la pression d'entrée, à acquérir la consommation de carburant (FC), à acquérir le nombre de tours (NER) du moteur (2), à déterminer le rapport théorique minimal (NMR) entre la pression de sortie et la pression d'entrée sur la base de la consommation acquise de carburant et du nombre acquis de tours du moteur (2), à comparer le rapport réel avec le rapport théorique minimal, et à générer un signal d'alarme dès que le rapport réel est inférieur au rapport théorique minimal.

**12.** Procédé selon la revendication 11, caractérisé en ce que ladite étape consistant à déterminer le rapport théorique minimal comprend les étapes consistant à lire une valeur de rapport théorique minimal (TMR) en fonction de la consommation acquise de carburant (FC) et du nombre acquis de tours (NER).

**13.** Procédé selon la revendication 11, caractérisé en ce que ladite étape consistant à déterminer le rapport théorique (TMR) comprend l'étape consistant à récupérer les valeurs de rapport théorique enregistrées (TMR1 à TMR4) pour des points de fonctionnement discrets (Q, R, S, T), contigus au point de fonctionnement réel (P) dicté par la consommation acquise de carburant (FC) et par le nombre de tours (NER), et à déterminer le rapport théorique minimal (TMR) pour le point de fonctionnement réel (P) sous forme d'un rapport intermédiaire entre lesdites valeurs enregistrées des rapports théoriques minimaux (TMR1 à TMR4).

**14.** Procédé selon la revendication 13, caractérisé par la récupération d'une valeur (FCINF) immédiatement inférieure et d'une valeur (FCSUP) immédiatement supérieure à la consommation réelle de carburant (FC), la récupération d'une valeur (NERINF) immédiatement inférieure et d'une valeur (NERSUP) immédiatement supérieure au nombre de tours réel (NER) du moteur (4), la récupération des valeurs

EP 0 491 275 B1

des rapports inférieurs et supérieurs (TMR1 à TMR4) correspondant à des points de fonctionnement (Q, R, S, T) identifiés par des paires desdites valeurs récupérées de consommation (FCINF, FCSUP) et du nombre de tours (NERINF, NERSUP), et la détermination d'une valeur intermédiaire tenant compte des valeurs récupérées des rapports théoriques minimaux supérieurs et inférieurs (TMR1 à TMR4).

15. Procédé selon la revendication 14, caractérisé en ce que ladite étape consistant à récupérer une valeur intermédiaire comprend l'étape consistant à extrapoler la courbe caractéristique du rapport théorique minimal entre des points de fonctionnement contigus (Q, R, S, T).

16. Procédé selon la revendication 15, caractérisé en ce que ladite étape d'extrapolation comprend les étapes consistant à extrapoler la courbe caractéristique du rapport théorique minimal entre deux points de fonctionnement contigus (Q, R) relatifs à la valeur de consommation immédiatement inférieure (FCINF) en vue de déterminer une valeur d'un rapport théorique inférieur (TMR5), à extrapoler la courbe caractéristique du rapport théorique minimal entre deux points contigus (S, T) relatifs à la valeur de consommation immédiatement supérieure (FCSUP) en vue de déterminer une valeur du rapport théorique immédiatement supérieur (TMR6) et à extrapoler la courbe caractéristique du rapport théorique minimal entre ladite valeur inférieure (TMR5) et ladite valeur supérieure (TMR6) du rapport théorique minimal.

17. Procédé selon l'une quelconque des revendications 11 à 16, caractérisé en ce que ladite étape de détermination du rapport réel entre la pression de sortie et la pression d'entrée comprend les étapes consistant à déterminer le quotient (RR) entre la pression de sortie (TOP) et la pression d'entrée (TIP), et à compenser ledit quotient sur la base de l'équation suivante:

$$RCR = RR - K1 \cdot \left[\frac{K2}{NER}\right]^{K3} \cdot \left[\frac{FC}{K4}\right]^{K5} \cdot \left[K6 - \frac{TIT}{K7 \cdot (273 + TIT)}\right]$$

où RR est le quotient déterminé, NER est le nombre de tours du moteur (2), FC est la consommation de carburant du moteur, TIT est la température à l'entrée du turbocompresseur, TIP est la pression d'entrée du turbocompresseur (4) et K1 à K7 sont des coefficients constants de compensation.

18. Procédé de diagnostic continu de l'unité de suralimentation comprenant un second turbocompresseur, selon l'une quelconque des revendications 11 à 17, caractérisé par la répétition des étapes consistant à acquérir la pression d'entrée et la pression de sortie du second turbocompresseur, à déterminer le rapport réel entre la pression de sortie et la pression d'entrée du second turbocompresseur, à comparer le rapport réel au rapport théorique minimal (TMR), et à générer un signal d'alarme dès que le rapport réel du second turbocompresseur est inférieur au rapport théorique minimal.

12

Fig.1

**Fig. 2**

ACQUISITION NER,FC — 30

DETERMINATION FC INF. — 31

DETERMINATION FC SUP. — 32

DETERMINATION NER INF. — 33

DETERMINATION NER SUP. — 34

DETERMINATION TMR1,TMR2,TMR3,TMR4 — 35

$$TMR5 = TMR1 + (TMR2 - TMR1)\frac{NER - NER\ INF}{NER\ SUP - NER\ INF}$$ — 36

$$TMR6 = TMR3 + (TMR4 - TMR3)\frac{NER - NER\ INF}{NER\ SUP - NER\ INF}$$ — 37

$$TMR = \left[TMR5 + (TMR6 - TMR5)\frac{FC - FC\ INF}{FC\ SUP - FC\ INF}\right] * K$$ — 38

ACQUISITION TOP, TIP — 39

CALCULATION RR = TOP/TIP — 40

READING K1-K7 — 41

COMPENSATION
$$RCR = RR - K1 * (K2/NER)^{K3} * (FC/K4)^{K5} * \left[K6 - \frac{TIP}{K7 * (273 + TIT)}\right]$$ — 42

RCR < TMR — 43     YES

NO

ALARM ACTUATION — 44

14

Fig.3

| | |
|---|---|
| [0] | 0,001 |
| [1] | 800 |
| [2] | 850 |
| | • • • |
| [15] | 1800 |
| [16] | 1900 |
| [17] | 40 |
| [18] | 50 |
| | • • • |
| [31] | 220 |
| [32] | 240 |
| [33] | 1001 |
| [34] | 1002 |
| | • • • |
| [287] | 2203 |
| [288] | 2360 |

I, II, III, IV — 10

Fig. 4

Fig. 5